# EUROPEAN PATENT SPECIFICATION

(11) **EP 1 927 792 B1**
(45) Date of publication and mention of the grant of the patent: **17.02.2010**
(21) Application number: 07254520.5
(22) Date of filing: 20.11.2007
(51) Int. Cl.: F16H 57/04

(54) **Motorcycle**
Motorrad
Motocyle

(30) Priority: 29.11.2006 JP 2006322066; 26.01.2007 JP 2007016494
(43) Date of publication of application: 04.06.2008
(60) Divisional application: 09011370.5
(73) Proprietor: Yamaha Hatsudoki Kabushiki Kaisha, Iwata-shi, Shizuoka 438-8501 (JP)
(72) Inventor: Ishida, Yousuke, Shizuoka-ken 438-8501 (JP)
(74) Representative: Harris, Ian Richard

(56) References cited:
- EP-A- 0 952 075
- EP-A- 1 433 645
- EP-A- 1 619 419
- EP-A- 1 707 852
- EP-A- 1 712 463
- JP-A- 11 011 171
- US-A- 4 712 629
- US-A1- 2002 108 795
- US-A1- 2003 066 696
- US-A1- 2004 171 449
- US-A1- 2005 085 329
- US-A1- 2006 090 942

## Description

### BACKGROUND

The invention relates to a motorcycle comprising a belt type continuously variable transmission.

Up to now, known has been a motorcycle comprising a belt type continuously variable transmission (see JP-B-61-40864 and JP-B-6-57547, for example).

A belt type continuously variable transmission comprises a primary sheave, a secondary sheave and a V-belt wound around the primary sheave and the secondary sheave. The belt type continuously variable transmission generates heat to rise in temperature due to friction and such between the V-belt and the respective sheaves in operation of the belt type continuously variable transmission. Accordingly, it is preferable to provide an intake path to supply the belt type continuously variable transmission with air for cooling through the intake path.

In JP-B-61-40864 a power unit is disclosed comprising a two stroke type engine, a belt type continuously variable transmission and an intake path provided at a position lower than an upper end of a crank case of the engine for cooling the transmission. In JP-B-6-57547 a power unit is disclosed comprising a two stroke type engine, a belt type continuously variable transmission and an intake path extending to a position higher than a crank case of the engine for cooling the transmission.

As a kind of motorcycle, known has been a so-called off-road vehicle capable of running on a bad road. Mounting a belt type continuously variable transmission is also convenient for a rider even in the case of an off-road vehicle since the belt type continuously variable transmission allows a troublesome clutch operation to be made unnecessary.

In applying structures disclosed in JP-B-61-40864 and JP-B-6-57547 to an off-road vehicle, however, there are problems described below. Accordingly, a belt type continuously variable transmission including an intake path for cooling has not been applied to an off-road vehicle up to now.

That is to say, in the case of providing an intake path at a position lower than an upper end of a crank case like the structure disclosed in JP-B-61-40864, water and dust rose from the ground easily enter into the intake path. Therefore, it is not preferable to apply the structure disclosed in JP-B-61-40864 without any device in an off-road vehicle often running on an unpaved road and the like.

Further, in an off-road vehicle, a cylinder of an engine rises up and an angle between the cylinder and a horizontal line is large. Moreover, in an off-road vehicle, a good distance between a power unit and the ground, namely the minimum height from the ground, should be provided. This causes a cylinder and an exhaust pipe to be provided collectively above the crank case of the engine. Accordingly, the exhaust pipe or the cylinder is obstructive in extending the intake path to a position higher than the crank case like the structure disclosed in JP-B-6-57547.

As described above, it has been difficult to mount a belt type continuously variable transmission including a preferable intake path to an off-road vehicle or a motorcycle in the form equal to an off-road vehicle by simply applying a conventional technology.

An aim of the invention is to provide an off-road vehicle or a motorcycle equal to an off-road vehicle in which a belt type continuously variable transmission including a preferable intake path is mounted.

US-A-2004/0171449 discloses a motorcycle having a four-cycle type engine. A transmission case of a belt-type continuously variable transmission has an air inlet for receiving cooling air from an air-introducing duct which extends towards the front of the motorcycle. An exhaust pipe extends forwards and downwards from the front of a cylinder of the engine and then extends rearwards underneath the transmission case.

US-A-2006/0090942 discloses a utility vehicle having a four-cycle type engine. A transmission case of a belt-type continuously variable transmission has an inlet port for receiving air from a duct-like inlet assembly which extends forwards and upwards. Exhaust pipes extend upwards and backwards from the sides of cylinders of the engine and are located above the transmission case.

US-A 4 712 629 discloses a motor cycle according to the preamble of claim 1.

### SUMMARY

Aspects of the invention are defined in the claims.

An embodiment of the invention provides a motorcycle comprising: a four cycle type engine including a crank case and a cylinder extending upward from the crank case; a belt type continuously variable transmission provided on one end of the crank case in a width direction of the motorcyle; a transmission case covering at least a part of the belt type continuously variable transmission and having a belt chamber formed inside thereof for housing the belt type continuously variable transmission; an intake path extending upward from the transmission case in side view of the motorcycle for leading air to the belt chamber; and an exhaust pipe connected to the cylinder and crossing with the intake path above the transmission case in side view of the motorcycle.

An embodiment of the invention can provide an off-road vehicle or a motorcycle equal to an off-road vehicle in which a belt type continuously variable transmission including a preferable intake path is mounted.

### BRIEF DESCRIPTION OF THE DRAWINGS

Embodiments of the invention are described hereinafter, by way of example only, with reference to the accompanying drawings.
Fig. 1 is a side view of a first embodiment of motorcycle in accordance with the invention.
Fig. 2 is a side view of an integral part of the motorcycle of Figure 1.
Fig. 3 is a plan view of an integral part of the motorcycle of Figure 1.
Fig. 4 is a side view of an intake path.
Fig. 5 is a plan view of a fuel tank, a cover and the like.
Fig. 6 is a sectional view of a power unit.
Fig. 7 is an exploded perspective view of a second case block and an inner case.
Fig. 8 is an enlarged sectional view of a part of a power unit in which the periphery of a centrifugal clutch is shown.
Fig. 9 is a side view of a second embodiment of motorcycle in accordance with the invention.
Fig. 10 is a plan view of an integral part of the motorcycle of Figure 9.

### DETAILED DESCRIPTION

The inventor of the application has found, as a result of diligent study, that applying a four cycle type engine instead of a two cycle type engine allows an exhaust pipe to be thinned and that extending an intake path for cooling of a belt type continuously variable transmission upward from a transmission case allows the intake path to be compactly provided in a surplus space, which is created above the crank case by thinning the exhaust pipe, and thus, has conceived the invention. Embodiments of the invention will be described hereinafter.

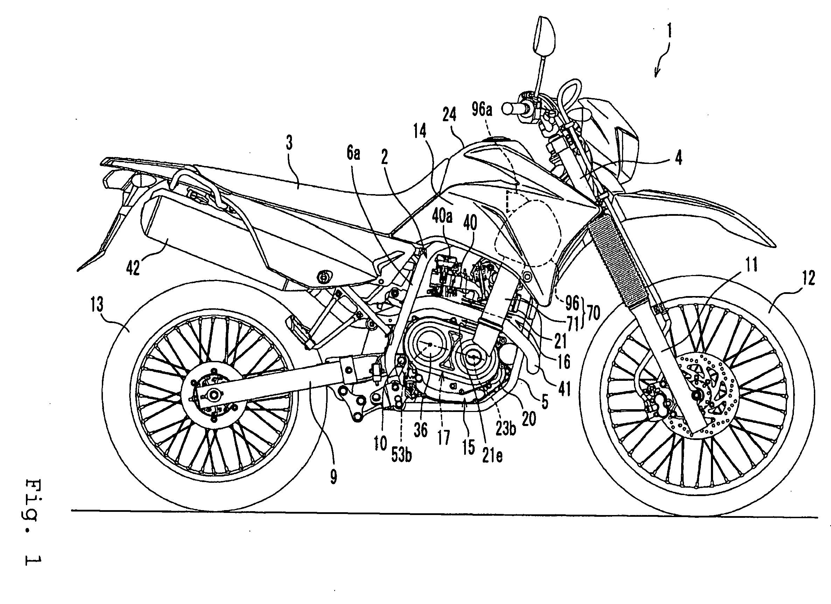

Figs. 1 to 3 illustrate a first embodiment (hereinafter Embodiment 1) of a motorcycle 1 in accordance with the invention, in which an intake path 70 for cooling in a belt type continuously variable transmission 17 extends on an outer side of an exhaust pipe 41 in a vehicle width direction to the upper side.

The motorcycle 1 in Embodiment 1 is a so-called off-road type motorcycle. The motorcycle 1 comprises a body frame 2, a fuel tank 24 supported on the body frame 2 and a seat 3 supported on the body frame 2 and provided behind the fuel tank 24. In the specification, back-and-forth and lateral directions mean directions in view of a rider sitting on the seat 3.

Further, "extending to the upper side" means a case of extending upward as a whole in the specification. It is not limited to a case of extending vertically but includes a case of extending obliquely upward. Similarly, a meaning of "rearward" is not limited to a direction to the rear side along a strictly back-and-forth direction but includes a direction to the rear side along a direction inclining perpendicularly or laterally to the back-and-forth direction. That is to say, the "rearward" in the specification includes a so-called obliquely rear side.

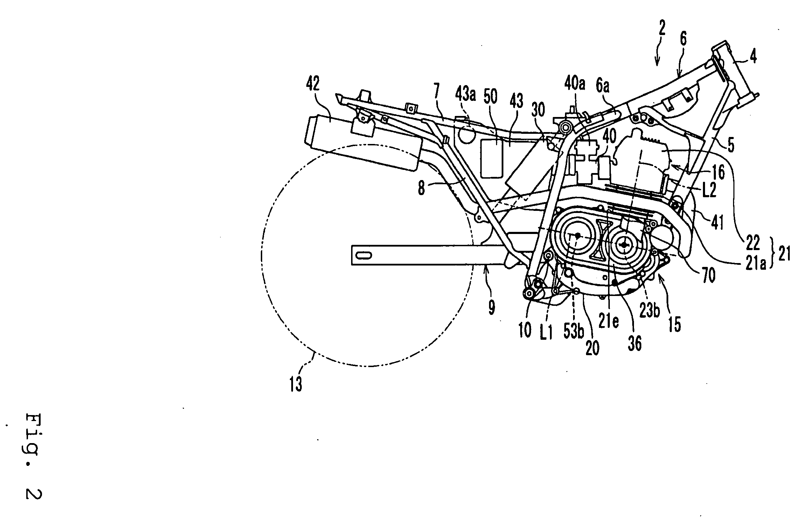

As shown in Fig. 2, the body frame 2 includes a head pipe 4, a down tube 5 extending downward from the head pipe 4, a main tube 6 extending rearward from the head pipe 4 above the down tube 5. A pair of right and left seat pillars 6a is divided downward from a middle part of the main tube 6. A seat rail 7 extending rearward is connected to the seat pillar 6a. A middle part of the seat rail 7 is connected to a rear end of a backstay 8. A front end of the backstay 8 is connected to a lower end of the seat pillar 6a.

A front fork 11 is inserted into the head pipe 4 as shown in Fig. 1. On a lower end of the front fork 11, supported is a front wheel 12. A pivot shaft 10 is inserted into the body frame 2. On the pivot shaft 10, supported is a front end of a rear arm 9 so as to be freely swingable. A rear wheel 13 is supported on a rear end of the rear arm 9.

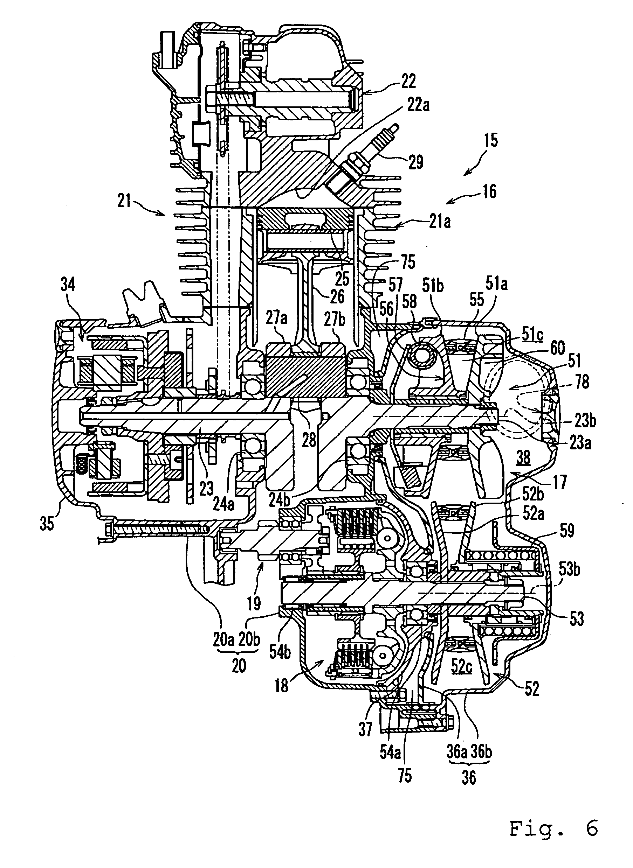

A power unit 15 is supported on the body frame 2. The power unit 15 comprises an engine 16 and a belt type continuously variable transmission (referred to as a CVT, hereinafter) 17 although a detail thereof is described later (refer to Fig. 6).

The engine 16 comprises a crank case 20 and a cylinder 21 extending upward (more particularly, obliquely upward to the front side) from the crank case 20. The cylinder 21 includes a cylinder body 21a and a cylinder head 22, as shown in Fig. 2. As described above, the so-called cylinder head 22 is assumed to be included in the cylinder 21 in the specification.

In the motorcycle 1 in accordance with Embodiment 1, the cylinder 21 rises from the crank case 20 and slightly inclines forward with respect to the vertical direction. In other words, the cylinder 21 greatly inclines with respect to the horizontal line. Further, as described later, the CVT 17 comprises a primary sheave shaft 23a and a secondary sheave shaft 53. A line L1 connecting an axial core 23b of the primary sheave shaft 23a and an axial core 53b of the secondary sheave shaft 53 substantially crosses at right angles with a center line L2 of the cylinder 21 in side view. In Embodiment 1, the axial core 53b of the secondary sheave shaft 53 is provided at a position higher than the axial core 23b of the primary sheave shaft 23a.

On the rear side of the cylinder 21, connected is an intake pipe 40. The intake pipe 40 is provided with a carburetor 40a. A rear end of the intake pipe 40 is connected to an air chamber 43. The air chamber 43 is omitted from drawing in Fig. 1.

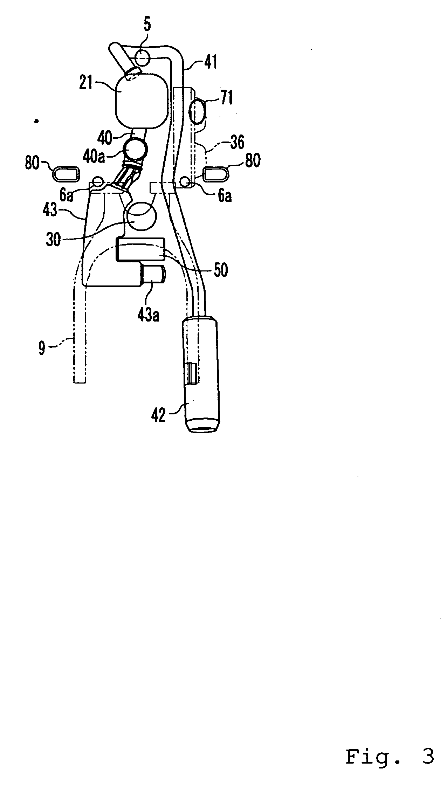

An exhaust pipe 41 is connected on the front side of the cylinder 21. The exhaust pipe 41 projects forward from the cylinder 21 to curve or bend toward the rear side and extends above the transmission case 36 or the crank case 20 to the rear side (refer to Fig. 3, too). In side view, the exhaust pipe 41 crosses with the later-described intake path 70 above the transmission case 36. As shown in Fig. 1, a rear end of the exhaust pipe 41 is connected to a muffler 42.

Inside the transmission case 36, formed is a belt chamber 38 housing the CVT 17 although that is described in detail later (refer to Fig. 6). As shown in Fig. 1, in front of a center place of the transmission case 36 in the back-and-forth direction, connected is the intake path 70 for supplying the belt chamber 38 with air for cooling. In detail, the intake path 70 extends obliquely upward to the front side from a part of the transmission case 36, the part located in front of a rear end 21e of the cylinder 21, in side view. In Embodiment 1, the intake path 70 comprises an intake duct 71 extending obliquely upward to the front side from the transmission case 36 and an air box 96 connected to an upper end of the intake duct 71. The air box 96, however, is not necessarily provided. The intake path 70 may be formed only from the intake duct 71. The air box 96 and the intake duct 71 may be formed into one body or separate bodies.

The air box 96 is an air path forming member whose appearance is formed into the shape of a box. In the intake path 70 for cooling in the CVT 17, substantially no pulse of air is generated differently from the intake pipe 40 of the engine 16. Accordingly, the air box 96 may be not necessarily a so-called air chamber for temporarily storing air. The air box 96 may be one with a meander flow channel formed inside thereof, for example. The air box 96 may be an air chamber, of course.

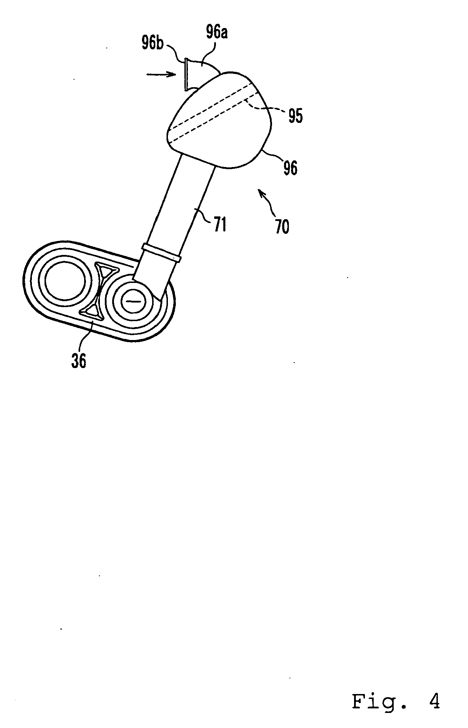

As shown in Fig. 4, an air filter 95 is formed inside the air box 96. An intake pipe 96a is connected on an upper and rear side of the air box 96. An intake opening 96b opening rearward is formed in the intake pipe 96a.

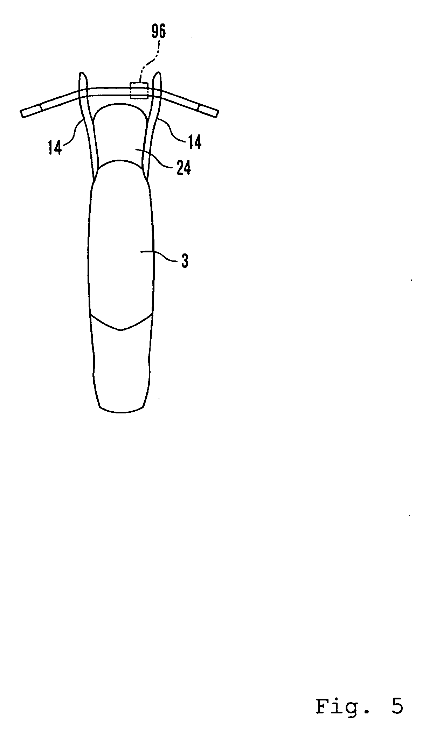

On sides of the fuel tank 24, provided is a pair of right and left covers 14 formed so as to widen in the vehicle direction toward the front side, as shown in Fig. 5. The air box 96 is provided on the inner side of the cover 14, as shown in Fig. 1. The intake pipe 96a of the air box 96 is also provided on the inner side of the cover 14. In other words, the air box 96 (including the intake pipe 96a) is covered with the cover 14 in side view. The intake path 70 extends to the inner side of the cover 14 and a part of the intake pipe 70 is provided on the inner side of the cover 14, as described above.

In Embodiment 1, the exhaust pipe 41 and the intake duct 71 are provided on the right side of the cylinder 21, as shown in Fig. 3. The intake duct 71 is adjacent to the cylinder 21 in the vehicle width direction. In other words, the intake duct 71 and the cylinder 21 are overlapped in side view (refer to Fig. 1) . The exhaust pipe 41 extends rearward between the cylinder 21 and the intake duct 71.

As shown in Fig. 3, a rear cushion unit 30 is provided at the center part in the vehicle width direction. The rear cushion unit 30 is provided between the main tube 6 and the rear arm 9 to connect the main tube 6 and the rear arm 9, as shown in Fig. 2. The motorcycle 1 in accordance with Embodiment 1 includes only one rear cushion unit 30 and has a so-called mono-suspension structure. The rear cushion unit 30 is not limited to one directly connected to the rear arm 9 but may be one connected to the rear arm 9 through a link.

Behind the rear cushion unit 30 and on the right side of the air chamber 43, provided is a battery 50 as shown in Fig. 3. The battery 50 is provided under the seat 3 (refer to Fig. 1). As shown in Fig. 3, the air chamber 43 is connected to the intake pipe 43a opening rightward. A numeral 80 denotes a footstep.

Now, described will be an inner structure of the power unit 15, made reference to Figs. 6 to 8.

Fig. 6 shows a cross section of the power unit 15. As shown in Fig. 5, the power unit 15 comprises the engine 16, the CVT 17, a centrifugal clutch 18 and a reduction mechanism 19. The engine 16 is a four cycle type engine repeating a cycle formed from an intake process, a compression process, a combustion process and an exhaust process. In Embodiment 1, the engine 16 is a four cycle single cylinder engine.

The engine 16 comprises the crank case 20, the cylinder body 21a connected to the crank case 20 and the cylinder head 22 connected on the upper side of the cylinder body 21a. The cylinder body 21a and the cylinder head 22 form the cylinder 21, as described before. The crank case 20 includes two divided case blocks, namely, a first case block 20a located on the left side and a second case block 20b located on the right side. The first case block 20a and the second case block 20b are faced to each other along the vehicle width direction.

In the crank case 20, housed is a crank shaft 23. The crank shaft 23 extends in the vehicle width direction and is provided horizontally. The crank shaft 23 is supported on the first case block 20a through a bearing 24a and on the second case block 20b through the bearing 24b.

A piston 25 is slidably inserted into the cylinder 21. One end of a connecting rod 26 is connected to the piston 25. A crank pin 28 is provided between a left crank arm 27a and a right crank arm 27b of the crank shaft 23. The other end of the connecting rod 26 is connected to the crank pin 28.

In the cylinder head 22, formed are a concave 22a and an intake port and an exhaust port, which are not shown and communicate with the concave 22a. An ignition plug 29 is inserted into the cylinder head 22. The intake port is connected to the above-mentioned intake pipe 40 (refer to Fig. 1). The exhaust port is connected to the exhaust pipe 41 (refer to Fig. 1).

A generator case 35 for housing a generator 34 is mounted to the left side of a front half of the first case block 20a. A transmission case 36 for housing the CVT 17 is mounted to the right side of the second case block 20b. Further, on the right side of a rear half of the second case block 20b, formed is an opening, which is covered with a clutch cover 37.

The transmission case 36 is formed independently from the crank case 20. The transmission case 36 is formed from an inner case 36a covering the inner side (the left side) of the CVT 17 in the vehicle width direction and an outer case 36b covering the outer side (the right side) of the CVT 17 in the vehicle width direction. The inner case 36a is mounted on the right side of the crank case 20. The outer case 36b is mounted on the right side of the inner case 36a. Inside the inner case 36a and the outer case 36b, formed is the belt chamber 38 housing the CVT 17. An intake opening 78 is formed on an upper surface of the outer case 36b. The intake opening 78 is connected to the above-mentioned intake duct 71 (refer to Fig. 1).

A right end of the crank shaft 23 passes through the second case block 20b and the inner case 36a to extend to the belt chamber 38. A primary sheave 51 of the CVT 17 is fitted in the right end of the crank shaft 23. Accordingly, the primary sheave 51 rotates in accordance with rotation of the crank shaft 23. A right part of the crank shaft 23 (strictly, a part on the right side of the bearing 24b) forms the primary sheave shaft 23a.

On the other hand, a left end of the crank shaft 23 passes through the first case block 20a to extend to the inner side of the generation case 35. The generator 34 is mounted to the left end of the crank shaft 23.

In a rear half of the crank case 20, the secondary sheave shaft 53 in which a secondary sheave 52 is fitted is provided parallel to the crank shaft 23. A part on the right side of a center part of the secondary sheave shaft 53 is supported on the clutch cover 37 through a bearing 54a. A part on the left side of the secondary sheave shaft 53 is supported on a left end of the second case block 20b through a bearing 54b. The secondary sheave 52 is connected to a right end of the secondary sheave shaft 53.

The CVT 17 comprises a V-belt 55 wound around the primary sheave 51 and the secondary sheave 52 in addition to the primary sheave 51 and the secondary sheave 52.

The primary sheave 51 comprises a fixed sheave body 51a located on the outer side in the vehicle width direction and a movable sheave body 51b located on the inner side in the vehicle width direction and faced to the fixed sheave body 51a. The fixed sheave body 51a is fixed to a right part of the primary sheave shaft 23a and rotates together with the primary sheave shaft 23a. The movable sheave body 51b is provided on the left side of the fixed sheave body 51a and mounted to the primary sheave shaft 23a so as to be freely slidable. Accordingly, the movable sheave body 51b rotates together with the primary sheave shaft 23a and is freely slidable in an axial direction of the primary sheave shaft 23a. Between the fixed sheave body 51a and the movable sheave body 51b, formed is a belt groove 51c. A cam surface 56 is formed in a part of the left side of the movable sheave body 51b. A cam plate 57 is provided on the left side of the cam surface 56. A roller weight 58 is provided between the cam surface 56 of the movable sheave body 51b and the cam plate 57.

The secondary sheave 52 comprises a fixed sheave body 52a located on the inner side in the vehicle width direction and a movable sheave body 52b located on the outer side in the vehicle width direction and faced to the fixed sheave body 52a. The movable sheave body 52b is fixed to a right part of the secondary sheave shaft 53. The movable sheave body 52b rotates together with the secondary sheave shaft 53 and is freely slidable in an axial direction of the secondary sheave shaft 53. On the right side of the secondary sheave 52, provided is a compression coil spring 59. The movable sheave body 52b receives leftward urging force from the compression coil spring 59. An axial core part of the fixed sheave body 52a is a cylindrical slide collar spline-fitted in the secondary sheave shaft 53. Between the fixed sheave body 52a and the movable sheave body 52b, formed is a V-shaped belt groove 52c.

The V-belt 55 is a so-called resin block belt comprising plural resin blocks and a connection body for connecting the resin blocks.

On the right side of the fixed sheave body 51a of the primary sheave 51, formed are plural vanes 60 for ventilation. The intake opening 78 formed on the upper surface of the transmission case 36 is connected to the intake duct 71 (refer to Fig. 1), as described above. The intake opening 78 is formed in a front half of the transmission case 36 (above the primary sheave 51). Accordingly, the intake duct 71 is connected in front of a rear end of the primary sheave 51.

When the fixed sheave body 51a rotates together with the primary sheave shaft 23a in such a structure, air is led into the belt chamber 38 through the intake opening 78 by means of the vanes 60 while air in the belt chamber 38 is exhausted to the outside. In Embodiment 1, the vane 60 is formed so as to extend spirally outward in the diameter direction from the center part of the fixed sheave body 51a in side view. A concrete shape of the vane 60, however, is not limited at all. The number of the vane 60 is also not limited at all. It may be possible to provide a vaned wheel or the like, which is formed separately from the fixed sheave body 51a, on the outer side of the fixed sheave body 51a.

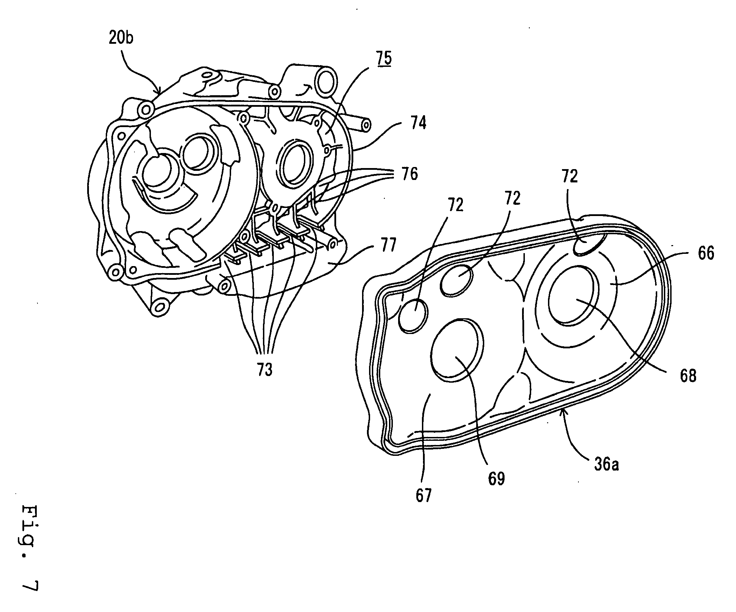

Fig. 7 is a perspective view of the second case block 20b and the inner case 36a. As shown in Fig. 7, a front half 66 of the inner case 36a is formed into the shape of a bowl projecting leftward while a rear half 67 of the inner case 36a is formed into the shape of a bowl projecting rightward. In the front half 66, formed is a hole 68 into which the primary sheave shaft 23a (refer to Fig. 6) of the CVT 17 is inserted. A hole 69 into which the secondary sheave shaft 53 (refer to Fig. 6) of the CVT 17 is inserted is formed in the rear half 67. In Fig. 7, omitted from drawing is the clutch cover 37 (refer to Fig. 6) existing between the inner case 36a and the second case block 20b.

Vents 72 are provided in the inner case 36a. In Embodiment 1, the vent 72 is formed into a circular shape. The vent 72 is three in number and provided on an upper side of a center position of the inner case 36a in the perpendicular direction. The shape and number of the vent 72, however, are not limited at all.

In a lower part of a right part of the second case block 20b, formed are plural vents 73. In detail, the second case block 20b includes a peripheral part 74 rising up rightward. The peripheral part 74 is in the shape corresponding to a shape of an outline of the transmission case 36. A lower part of the peripheral part 74 is formed into the shape of a slit so that a part of the lower part would be notched, to form a so-called comb shape. Accordingly, a space 75 sectioned by the second case block 20b and the inner case 36a communicates with the outside of the power unit 15 (refer to Fig. 6) through the vents 73. The space 75 is formed between the clutch cover 37 and the inner case 36a in a rear half of the second case block 20b since the right side of the rear half of the second case block 20b is covered with the clutch cover 37 (refer to Fig. 6).

In the comb-shaped part of the peripheral part 74, provided are reinforcement ribs 76. An oil pan 77 is provided under the vents 73.

In accordance with such a structure, the air in the belt chamber 38 is led to the space 75 through the vents 72 of the inner case 36a to be exhausted toward the oil pan 77 through the vents 73 of the second case block 20b. As a result, the air is exhausted to the outside of the power unit 15.

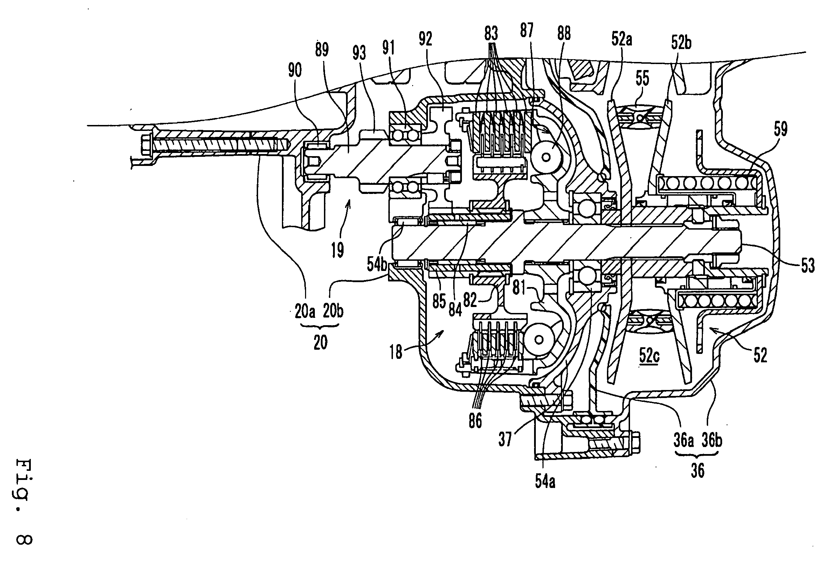

Fig. 8 is an enlarged view of a part shown in Fig. 6. As shown in Fig. 8, the centrifugal clutch 18 is mounted to a left part of the secondary sheave shaft 53. The centrifugal clutch 18 is a wet type multi-plate clutch and comprises a substantially cylindrical clutch housing 81 and a clutch boss 82. The clutch housing 81 is spline-fitted in the secondary sheave shaft 53 to rotate in a body with the secondary sheave shaft 53. A plural number of ring-shaped clutch plates 83 are mounted to the clutch housing 81.

A cylindrical gear 85 is fitted through a bearing 84 in the periphery of the left part of the secondary sheave shaft 53 so as to be freely rotatable. The clutch boss 82 is provided on the inner side in the diameter direction of the clutch plate 83 and on the outer side in the diameter direction of the gear 85 to engage with the gear 85. This causes the gear 85 to rotate together with the clutch boss 82. On the outer side in the diameter direction of the clutch boss 82, mounted are a plural number of ring-shaped friction plates 86. The friction plates 86 are provided in line at intervals in an axial direction of the secondary sheave shaft 53. Each of the friction plates 86 is provided between the adjacent clutch plates 83 and 83.

On the left side of the clutch housing 81, formed are plural cam surfaces 87. A roller weight 88 is provided between the cam surface 87 and the most right clutch plate 83 faced to the cam surface 87.

The centrifugal clutch 18 can be automatically switched between an in-clutch state (namely, a state of connection) and an off-clutch state (namely, a state of disconnection) in accordance with a size of centrifugal force operating on the roller weight 88. In Fig. 8, a part lower than the secondary sheave shaft 53 shows the in-clutch state while a part upper than the secondary sheave shaft 53 shows the out-of-clutch state.

The reduction mechanism 19 is provided between the centrifugal clutch 18 and an output shaft (not shown). The reduction mechanism 19 includes a transmission shaft 89 provided parallel to the secondary sheave shaft 53. The transmission shaft 89 is supported on the first case block 20a through a bearing 90 so as to be freely rotatable. The transmission shaft 89 is also supported on the second case block 20b through a bearing 91 so as to be freely rotatable. On a right end of the transmission shaft 89, provided is a first transmission gear 92 engaging with the gear 85.

In a center part of the transmission shaft 89, provided is a second transmission gear 93 having a diameter smaller than that of the first transmission gear 92. The second transmission gear 93 is arranged to engage with an output shaft not shown or a gear, which is not shown and provided to the output shaft.

Such a structure allows the clutch boss 82 and the output shaft to be connected through the gear 85, the first transmission gear 92, the transmission shaft 89, the second transmission gear 93 and such. Accordingly, the output shaft rotates in accordance with rotation of the clutch boss 82. Around the output shaft, wound is a power transmission mechanism for transmitting driving force of the output shaft to the rear wheel 13 (refer to Fig. 1) such as a chain although this is not shown in the drawings.

The structure of the power unit 15 has been described above. Now, described will be a cooling operation of the CVT 17.

When the power unit 15 starts operating, the primary sheave shaft 23a of the CVT 17 rotates and the vanes 60 of the fixed sheave body 51a of the primary sheave 51 rotate in accordance with the rotation of the primary sheave shaft 23a. This results in generation of sucking force, which leads air from the intake duct 71 toward the belt chamber 38.

Air is then sucked into the air box 96 through the intake opening 96b (refer to Fig. 4) and passes through the filter 95 to be purified. After the above, the air is sucked into the belt chamber 38 through the intake duct 71. The air sucked into the belt chamber 38 flows in the periphery of the primary sheave 51, the secondary sheave 52 and the V-belt 55 to cool the primary sheave 51, the secondary sheave 52 and the V-belt 55.

The air having cooled the primary sheave 51, the secondary sheave 52 and the V-belt 55 is exhausted from the belt chamber 38 through the vents 72 of the inner case 36a (refer to Fig. 7) to flow into the space 75 between the inner case 36a and the second case block 20b. The air in the space 75 is exhausted to the outside of the power unit 15 through the vents 73 formed in the lower part of the second case block 20b. Such a flow of air causes the CVT 17 to be continuously and regularly cooled.

As described above, in accordance with the motorcycle according to Embodiment 1, the four cycle type engine 16 is used while the intake path 70 extending upward from a part of the transmission case 36, the part located in front of the rear end 21e of the cylinder 21, in side view (refer to Fig. 1) is provided for the purpose of supplying the CVT 17 with air for cooling.

Thus, using the four cycle type engine 16 allows the exhaust pipe 41 to be narrowed, so that a surplus space can be secured above the crank case 20. Effectively using the surplus space as a space for providing the intake path 70 allows the intake path 70 to be provided upward without any obstruction by the cylinder 21 and the exhaust pipe 41. Accordingly, water and dust rose from the ground can be effectively prevented from entering, differently from a case of providing the whole of the intake path 70 at a position lower than the upper end of the crank case 20, so that the intake path 70 can be preferably provided. Thus, in accordance with the motorcycle 1 according to Embodiment 1, the CVT 17 including the preferable intake path 70 can be mounted in spite of an off-road type vehicle.

Further, in accordance with the motorcycle 1 according to Embodiment 1, the four cycle type engine 16 is used while the intake path 70 extending upward from the transmission case 36 in side view (refer to Fig. 1) is provided for the purpose of supplying the CVT 17 with air for cooling, and furthermore, the exhaust pipe 41 is provided so as to cross with the intake path 70 above the transmission case 36 in side view.

This also allows the intake path 70 to be provided upward without any obstruction by the cylinder 21 and the exhaust pipe 41, so that the above-mentioned effect can be achieved.

In Embodiment 1, the intake path 70 extends upward from a part of the transmission case 36, the part in front of the rear end 21e of the cylinder 21, in side view. Such a structure is more preferable. The intake path 70, however, may extend from a part located behind the rear end 21e of the cylinder 21 so long as the exhaust pipe 41 crosses with the intake path 70 above the transmission case 36 in side view.

Especially, the intake path 70 is arranged to be provided adjacently to the cylinder 21 in the vehicle width direction in Embodiment 1. Further, the exhaust pipe 41 is arranged to extend between the cylinder 21 and the intake path 70. These allow the cylinder 21, the exhaust pipe 41 and the intake path 70 to be provided at a higher density, so that the vehicle can be miniaturized.

Moreover, in accordance with Embodiment 1, a sucking part of the intake path 70, namely, the intake pipe 96a is provided on an inner side of the cover 14. Accordingly, the cover 14 effectively prevents mud or the like from entering the intake path 70. Further, there is a certain degree of space on the inner side of the cover 14. Effectively using the space as a space for providing a part of the intake path 70 (mainly the air box 96, in Embodiment 1) allows the whole vehicle to be made compact.

In addition, the intake opening 96b of the intake pipe 96a is open rearward in accordance with Embodiment 1. This causes mud or the like to be further prevented from entering the intake path 70. Further, rainwater can be effectively prevented from entering the intake path 70 even in the case of rain. Particularly, the intake opening 96b of the intake pipe 96a is faced to the inner surface of the cover 14 in Embodiment 1. Accordingly, mud or the like can be prevented more from entering through the intake opening 96b.

As described above, in accordance with Embodiment 1, the air box 96 including the air filter 95 built in is provided on the inner side of the cover 14. The air filter 95 is comparatively large component. Putting a comparatively large space on the inner side of the cover 14 to practical use like Embodiment 1, however, allows the air filter 95 to be prevented from projecting to the outside, so that the air filter 95 can be provided compactly.

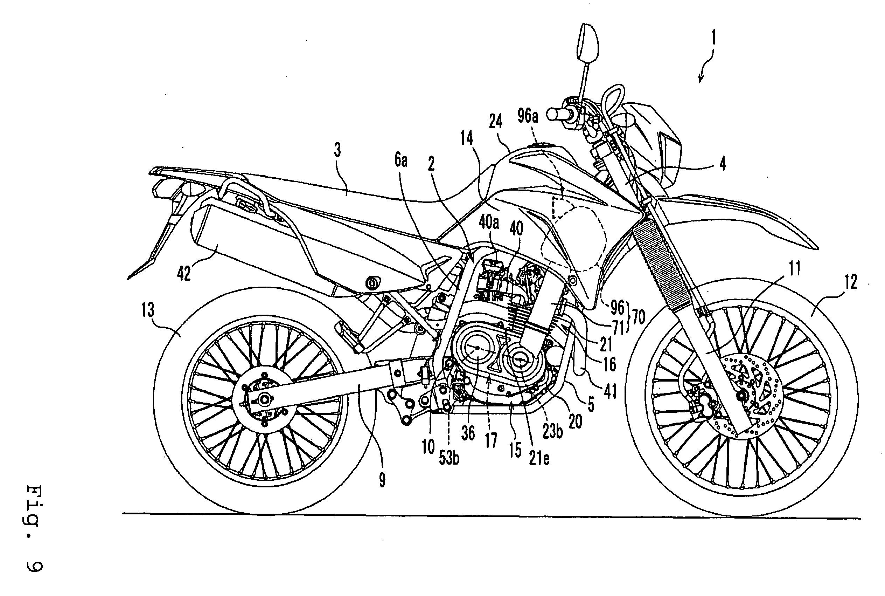

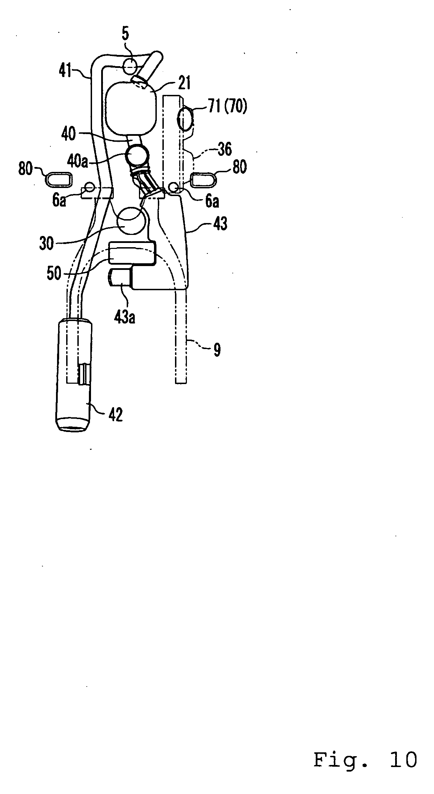

The motorcycle 1 in accordance with a second embodiment (hereinafter Embodiment 2) is one in which the location of the exhaust pipe 41 in Embodiment 1 is changed, as shown in Figs. 9 and 10. In the following description, a component similar to that of Embodiment 1 is marked with the same reference signs and numerals and a part different from Embodiment 1 is only described.

As shown in Figs. 9 and 10, the exhaust pipe 41 extends rearward on the left side of the cylinder 21 in Embodiment 2. That is to say, the exhaust pipe 41 extends rearward on a side opposite to a side of the intake path 70 of the cylinder 21.

The air chamber 43 is provided on the right side of the rear cushion unit 30 and the battery 50, as shown in Fig. 10. In Embodiment 2, the intake pipe 43a of the air chamber 43 opens leftward.

As described above, in accordance with Embodiment 2, the intake duct 71 of the intake path 70 is provided on the right side of the cylinder 21, the exhaust pipe 41 is provided on the left side of the cylinder 21 and the intake path 70 and the exhaust pipe 41 are provided on sides opposite to each other. Accordingly, the intake path 70 can extend upward from the transmission case 36 without obstruction by the exhaust pipe 41, so that a preferable intake path 70 can be achieved. Moreover, the exhaust pipe 41 does not project in the vehicle width direction even in the case that the exhaust pipe 41, the cylinder 21 and the intake path 70 are in line in the vehicle width direction since the engine 16 is a four cycle type engine and the exhaust pipe 41 is thin. This allows the intake path 70 for cooling in the CVT 17 to be preferably provided without increasing the size of the vehicle.

The invention is not limited to the above-mentioned embodiments but can be carried out in practice in other various kinds of embodiments. In the above embodiments, the motorcycle 1 is an off-road vehicle. The off-road vehicle in the above context means a motorcycle suitable for running on a bad road. The off-road vehicle, however, may be one running on a paved road, of course. Further, the motorcycle in accordance with the invention may be a motorcycle of a type equal to an off-road vehicle. For example, the motorcycle in accordance with the invention may be a motorcycle unsuitable for running on a bad road in practice although it is an off-road type motorcycle in appearance.

In the above embodiments, the whole of the intake path 70 extends upward from a part located in front of the rear end 21e of the cylinder 21. The embodiments, however, are only examples. It may be possible that only a part of the intake path 70 extends from a part located in front of the rear end 21e of the cylinder 21. Moreover, the whole of the air box 96 including the sucking part 96a is provided on the inner side of the cover 14 in the embodiments. It may be possible, however, that a part of the air box 96 or a part of the sucking part 96a is only provided on the outer side of the cover 14.

As mentioned above, "extending upward" in the specification means a case of extending upward as a whole. It is not limited to a case of extending vertically upward but includes a case of extending obliquely upward. Accordingly, a case of extending obliquely upward to the front side or the like corresponds to the case of "extending upward" in the specification.

Furthermore, "opening rearward" is not limited to a case of opening rearward along the back-and-forth direction, namely, a case of opening rearward in the strict sense of the word. "Opening rearward" in the specification also includes a case of opening rearward along a direction inclining perpendicularly or laterally to the back-and-forth direction, namely, a case of opening toward the so-called obliquely rear side.

As mentioned above, "a cylinder" in the specification includes not only a cylindrical member into which a piston is inserted, namely, a cylinder body but also a so-called cylinder head.

As described above, the invention finds application to a motorcycle.

### DESCRIPTION OF REFERENCE NUMERALS AND SIGNS

1: MOTORCYCLE
14: COVER
16: ENGINE
17: BELT TYPE CONTINUOUSLY VARIABLE TRANSMISSION
20: CRANK CASE
21: CYLINDER
21e: REAR END OF CYLINDER
23a: PRIMARY SHEAVE SHAFT
23b: AXIAL CORE OF PRIMARY SHEAVE SHAFT
24: FUEL TANK
36: TRANSMISSION CASE
38: BELT CHAMBER
41: EXHAUST PIPE
51: PRIMARY SHEAVE
52: SECONDARY SHEAVE
53: SECONDARY SHEAVE SHAFT
53b: AXIAL CORE OF SECONDARY SHEAVE SHAFT
55: V-BELT
70: INTAKE PATH
71: INTAKE DUCT
95: AIR FILTER
96: AIR BOX (BOX-SHAPED MEMBER)
96a: SUCKING PART
96b: INTAKE OPENING
L1 : LINE CONNECTING AXIAL CORE OF PRIMARY SHEAVE SHAFT AND AXIAL CORE OF SECONDARY SHEAVE SHAFT
L2: CENTER AXIS OF CYLINDER

## Claims

1. A motorcycle (1) comprising:
a four cycle type engine (16) including a crank case (20) and a cylinder (21) extending upward from the crank case (20) ;
a belt type continuously variable transmission (17) provided on one end of the crank case (20) in a width direction of the motorcycle;
a transmission case (36) covering at least a part of the belt type continuously variable transmission (17) and having a belt chamber (38) formed inside thereof for housing the belt type continuously variable transmission (17);
an intake path (70) extending upward from the transmission case (36) in side view of the motorcycle for leading air to the belt chamber (38); and **characterized by**:
an exhaust pipe (41) connected to the cylinder (21) and crossing with the intake path (70) above the transmission case (36) in side view of the motorcycle.

2. The motorcycle (1) according to Claim 1, further comprising:
a fuel tank (24); and
a pair of right and left covers (14) provided on sides of the fuel tank (24) and formed so as to widen toward the front side in the width direction of the motorcycle in plan view,
wherein:
the intake path (70) has at least a part (96) provided on an inner side of the covers (14) and includes a sucking part (96a) for sucking air in.

3. The motorcycle (1) according to Claim 2, wherein
an intake opening (96b) opening rearward is formed in the sucking part (96a).

4. The motorcycle (1) according to Claim 1, further comprising:
a fuel tank (24); and
a pair of right and left covers (14) provided on sides of the fuel tank (24) and formed so as to widen toward the front side in the width direction of the motorcycle in plan view,
wherein:
the intake path (70) includes an intake duct (71) extending upward from the transmission case (36) and a box-shaped member (96) provided inside the covers (14), connected to the intake duct (71) and housing an air filter (95) therein.

5. The motorcycle (1) according to any preceding Claim, wherein
the intake path (70) is adjacent to the cylinder (21) in the width direction of the motorcycle.

6. The motorcycle (1) according to Claim 5, wherein
the exhaust pipe (41) extends rearward between the cylinder (21) and the intake path (70).

7. The motorcycle (1) according to Claim 5, wherein
the exhaust pipe (41) extends rearward on a side of the cylinder (21), the side being opposite to a side of the intake path (70).

8. The motorcycle (1) according to any preceding Claim, wherein
the belt type continuously variable transmission (17) includes a primary sheave (51), a secondary sheave (52), a V-belt (55) wound around the primary sheave (51) and the secondary sheave (52), a primary sheave shaft (23a) positioned at a center of rotation of the primary sheave (51) and a secondary sheave shaft (53) positioned at a center of rotation of the secondary sheave (52) and
a line (L1) connecting an axial core (23b) of the primary sheave shaft (23a) and an axial core (53b) of the secondary sheave shaft (53) crosses substantially at right angles with a center line (L2) of the cylinder (21) in side view of the motorcycle.

9. The motorcycle (1) according to any preceding Claim, wherein
the intake path (70) extends upward from a part (78) of the transmission case (36), said part (78) being in front of a rear end (21e) of the cylinder (21) in side view of the motorcycle.

## Patentansprüche

1. Motorrad (1) mit:
einem Viertaktmotor (16) mit einem Kurbelgehäuse (20) und einem sich von diesem nach oben erstreckenden Zylinder (21);
einem stufenlosen Übersetzungsgetriebe (17) mit Riemen, welches an einem Ende des Kurbelgehäuses (20) in einer Querrichtung des Motorrades vorgesehen ist;
einem Getriebegehäuse (36), welches mindestens einen Teil des stufenlosen Übersetzungsgetriebes (17) mit Riemen abdeckt und eine Riemenkammer (38) hat, die innerhalb desselben gebildet ist, um das stufenlose Übersetzungsgetriebe (17) mit Riemen aufzunehmen;
einer Ansaugstrecke (70), die sich von dem Getriebegehäuse (36) in Seitenansicht des Motorrades nach oben erstreckt, um Luft zu der Riemenkammer (38) zuzuführen; und **gekennzeichnet durch**:
ein Auspuffrohr (41), welches mit dem Zylinder (21) verbunden ist und die Ansaugstrecke (70) über dem Getriebegehäuse (36) in Seitenansicht des Motorrades kreuzt.

2. Motorrad (1) nach Anspruch 1, ferner mit:
einem Kraftstofftank (24); und
einem Paar von rechten und linken Abdeckungen (14), die an den Seiten des Kraftstofftankes (24) vorgesehen und so geformt sind, dass sie in der Querrichtung des Motorrades in Draufsicht zur Vorderseite hin breiter werden,
wobei:
die Ansaugstrecke (70) wenigstens einen Teil (76) hat, der auf einer Innenseite der Abdeckungen (14) vorgesehen ist und einen Ansaugteil (96a) für das Einsaugen von Luft aufweist.

3. Motorrad (1) nach Anspruch 2, wobei eine Ansaugöffnung (96b), die sich nach hinten öffnet, in dem Ansaugteil (96a) gebildet ist.

4. Motorrad (1) nach Anspruch 1, ferner mit:
einem Kraftstofftank (24), und
einem Paar von rechten und linken Abdeckungen (14), die an den Seiten des Kraftstofftanks (24) vorgesehen und so gebildet sind, dass sie in Querrichtung des Motorrades in Draufsicht zur Vorderseite hin breiter werden, wobei:
die Ansaugstrecke (70) eine Ansaugleitung (71), die sich von dem Getriebegehäuse (36) nach oben erstreckt, und ein kastenförmiges Teil (96) aufweist, das innerhalb der Abdeckungen (14) vorgesehen ist, mit der Ansaugleitung (71) verbunden ist und einen Luftfilter (95) in diesem aufnimmt.

5. Motorrad (1) nach einem vorhergehenden Anspruch, wobei
die Ansaugstrecke (70) sich in der Querrichtung des Motorrades neben dem Zylinder (21) befindet.

6. Motorrad (1) nach Anspruch 5, wobei sich das Auspuffrohr (41) zwischen dem Zylinder (21) und der Ansaugstrecke (70) rückwärts erstreckt.

7. Motorrad (1) nach Anspruch 5, wobei
sich das Auspuffrohr (41) auf einer Seite des Zylinders (21) nach rückwärts erstreckt, wobei die Seite einer Seite der Ansaugstrecke (70) gegenüberliegt.

8. Motorrad (1) nach einem vorhergehenden Anspruch, wobei
das stufenlose Übersetzungsgetriebe (17) mit Riemen eine primäre Scheibe (51), eine sekundäre Scheibe (52), einen V-Riemen (55), welcher um die primäre Scheibe (51) und die sekundäre Scheibe (52) herum gewickelt ist, aufweist, eine Primärscheibenwelle (23a), die an einer Rotationsmitte der Primärscheibe (51) angeordnet ist, und eine Sekundärscheibenwelle (53) aufweist, die an einer Rotationsmitte der Sekundärscheibe (52) angeordnet ist und
eine Linie (L1), die einen axialen Kern (23b) der Primärscheibenwelle (23a) und einen axialen Kem (53b) der Sekundärscheibenwelle (53) unter im Wesentlichen rechten Winkeln eine Mittellinie (L2) des Zylinders (21) in Seitenansicht des Motorrades kreuzt.

9. Motorrad (1) nach einem vorhergehenden Anspruch, wobei
sich die Ansaugstrecke (70) von einem Teil (78) des Getriebegehäuses (36) nach oben erstreckt, wobei sich der Teil (78) vor einem hinteren Ende (21e) des Zylinders (21) in Seitenansicht des Motorrades befindet.

## Revendications

1. Motocyclette (1) comprenant :
un moteur à quatre temps (16) incluant un carter (20) et un cylindre (21) s'étendant vers le haut depuis le carter (20) ;
une transmission à courroie à variation continue (17) placée à une extrémité du carter (20) dans une direction transversale de la motocyclette ;
un carter de boîte de vitesses (36) couvrant au moins une partie de la transmission à courroie à variation continue (17) et à l'intérieur duquel une chambre pour courroie (38) est formée pour loger la transmission à courroie à variation continue (17) ;
un chemin d'admission (70) s'étendant vers le haut depuis le carter de boîte de vitesses (36) sur une vue de côté de la motocyclette pour amener de l'air dans la chambre pour courroie (38) ; et **caractérisée par** :
un tuyau d'échappement (41) raccordé au cylindre (21) et croisant le chemin d'admission (70) au-dessus du carter de boîte de vitesses (36) sur une vue de côté de la motocyclette.

2. Motocyclette (1) selon la revendication 1, comprenant en outre :
un réservoir de carburant (24) ; et
une paire de couvercles droit et gauche (14) placés sur les côtés du réservoir de carburant (24) et formés de manière à s'élargir en direction du côté avant dans la direction transversale de la motocyclette sur une vue en plan,
dans laquelle
le chemin d'admission (70) comprend au moins une partie (96) placée sur un côté intérieur des couvercles (14) et comprend une partie d'aspiration (96a) pour aspirer de l'air.

3. Motocyclette (1) selon la revendication 2, dans laquelle une ouverture d'admission (96b) s'ouvrant vers l'arrière est formée dans la partie d'aspiration (96a).

4. Motocyclette (1) selon la revendication 1, comprenant en outre ;
un réservoir de carburant (24) ; et
une paire de couvercles droit et gauche (14) placés sur les côtés du réservoir de carburant (24) et formés de manière à s'élargir en direction du côté avant dans la direction transversale de la motocyclette sur une vue en plan,
dans laquelle
le chemin d'admission (70) comprend une gaine d'admission (71) s'étendant vers le haut depuis le carter de boîte de vitesses (36) et un élément en forme de boîtier (96) placée à l'intérieur des couvercles (14), relié à la gaine
d'admission (71) et contenant un filtre à air (95).

5. Motocyclette (1) selon l'une quelconque des revendications précédentes, dans laquelle
le chemin d'admission (70) est adjacent au cylindre (21) dans la direction transversale de la motocyclette.

6. Motocyclette (1) selon la revendication 5, dans laquelle
le tuyau d'échappement (41) s'étend vers l'arrière entre le cylindre (21) et le chemin d'admission (70).

7. Motocyclette (1) selon la revendication 5, dans laquelle
le tuyau d'échappement (41) s'étend vers l'arrière sur un côté du cylindre (21), le côté se trouvant à l'opposé d'un côté du chemin d'admission (70).

8. Motocyclette (1) selon l'une quelconque des revendications précédentes, dans laquelle
la transmission à courroie à variation continue (17) comprend une poulie primaire (51), une poulie secondaire (52), une courroie trapézoïdale (55) enroulée autour de la poulie primaire (51) et de la poulie secondaire (52), un arbre de poulie primaire (23a) positionné en un centre de rotation de la poulie primaire (51) et un arbre de poulie secondaire (53) positionné en un centre de rotation de la poulie secondaire (52) et une ligne (L1) reliant un noyau axial (23b) de l'arbre de poulie primaire (23a) et un noyau axial (53b) de l'arbre de poulie secondaire (53) coupe sensiblement à angle droit une ligne centrale (L2) du cylindre (21) sur une vue de côté de la motocyclette.

9. Motocyclette (1) selon l'une quelconque des revendications précédentes, dans laquelle
le chemin d'admission (70) s'étend vers le haut depuis une partie (78) du carter de boîte de vitesses (36), ladite partie (78) se trouvant devant une extrémité arrière (21e) du cylindre (21) sur une vue de côté de la motocyclette.
